**Europäisches Patentamt**

**European Patent Office**

**Office européen des brevets**

(19)

(11) Veröffentlichungsnummer : **0 212 202
B1**

(12)  # EUROPÄISCHE PATENTSCHRIFT

(45) Veröffentlichungstag der Patentschrift :
07.06.89

(21) Anmeldenummer : 86109354.0

(22) Anmeldetag : 09.07.86

(51) Int. Cl.⁴ : **B 28 B   1/26**, B 28 B   7/34,
F 28 F 21/04, B 01 D 21/00

(54) Keramischer Körper sowie Verfahren und Form zur Herstellung desselben.

(30) Priorität : 18.07.85 CH 3119/85

(43) Veröffentlichungstag der Anmeldung :
04.03.87 Patentblatt 87/10

(45) Bekanntmachung des Hinweises auf die Patenterteilung : 07.06.89 Patentblatt 89/23

(84) Benannte Vertragsstaaten :
AT BE DE FR GB IT NL SE

(56) Entgegenhaltungen :
DE–A– 2 744 459
DE–C–   699 664
FR–A– 1 118 912
US–A– 4 025 462
US–A– 4 133 369
US–A– 4 379 109
US–A– 4 488 920

(73) Patentinhaber : GEBRÜDER SULZER AKTIENGESELL-
SCHAFT
Zürcherstrasse 9
CH-8401 Winterthur (CH)

(72) Erfinder : Kubicek, Vladimir
Gratstrasse 9
CH-8472 Seuzach (CH)

(74) Vertreter : Dipl.-Ing. H. Marsch Dipl.-Ing. K. Sparing
Dipl.-Phys.Dr. W.H. Röhl Patentanwälte
Rethelstrasse 123 Postfach 14 02 68
D-4000 Düsseldorf (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft einen keramischen Körper, insbesondere Füllkörper für Stoff- bzw. Wärmeaustausch, Misch- bzw. Trennvorrichtungen etc., bestehend aus wenigstens zwei sich im wesentlichen quer zu dessen Längsrichtung erstreckenden Lagen, wobei zwischen benachbarten Lagen mindestens eine Verbindungsstelle vorgesehen ist, sowie ein Verfahren und eine Form zu Herstellung desselben.

Zur Herstellung keramischer Körper der eingangs genannten Art war es bisher erforderlich, einzelne Lagen herzustellen und miteinander zu verbinden, z. B. durch Zusammenfügen mit mörtelartiger keramischer Masse und nochmaligen Brand, oder durch Verwendung fremder Verbindungsmaterialien, wie z. B. Kunststoff etc.

Aus der US-A-4 488 920 ist ein Verfahren zur Herstellung eines keramischen Wärmeaustauschers bekannt, der aus einzelnen, ebenen Lagen besteht, welche mit abstandsweise angeordneten, die Seitenwände der Kanäle bildenden Rippen versehen sind. Zur Herstellung der einzelnen Elemente werden aus Graphit bestehende Formen verwendet, welche nach Erzeugung der einzelnen keramischen Elemente verbrannt werden. Die so hergestellten Einzelelemente werden zu einem Wärmeaustauscher zusammengefügt und miteinander z. B. mittels keramischer Lötmittel oder anderer keramischer Zemente verbunden.

Dieses Verfahren hat jedoch den Nachteil, dass es zeitraubend ist und dass durch die Inhomogenität des Materials keine optimale Festigkeit, Korrosionsbeständigkeit etc. gewährleistet ist.

Aufgabe der Erfindung ist die Schaffung eines keramischen Körpers der eingangs genannten Art mit optimaler Festigkeit und Korrosionsbeständigkeit, sowie ein Verfahren und eine Form, welche die Herstellung komplexer mehrlagiger Strukturen in einem Arbeitsgang ohne zeitraubende Montagearbeiten erlaubt.

Zur Lösung dieser Aufgabe dienen die Merkmale und Massnahmen nach den Ansprüchen 1 und 8. Die Unteransprüche enthalten vorteilhafte Weiterbildungen.

Hierdurch lässt sich erreichen, dass die keramische Komponenten enthaltende suspension sich zwischen den Lagen der Form bzw. in den formhohlräumen verteilt, wobei die Verbindungsstellen durch homogenen Materialfluss entstehen. Nach dem keramischen Brand liegt eine komplexe mehrlagige Struktur mit homogenen Verbindungsstellen vor, ohne dass wesentliche Nacharbeiten erforderlich wären.

Die nähere Erläuterung der Erfindung erfolgt anhand von Ausführungsbeispielen in Verbindung mit nachstehender Zeichnung. Es zeigen :

Fig. 1 eine perspektivische Darstellung, teilweise im Schnitt, eines erfindungsgemässen keramischen Körpers,

Fig. 2 eine entsprechende Darstellung der zugehörigen Form,

Fig. 3 einen Vertikalschnitt durch eine Variante der Form gemäss Fig. 2, gefüllt mit keramischer Suspension bzw. keramischer Masse, und

Fig. 4 eine Ausführungsform gemäss Fig. 3 mit Distanzkörpern.

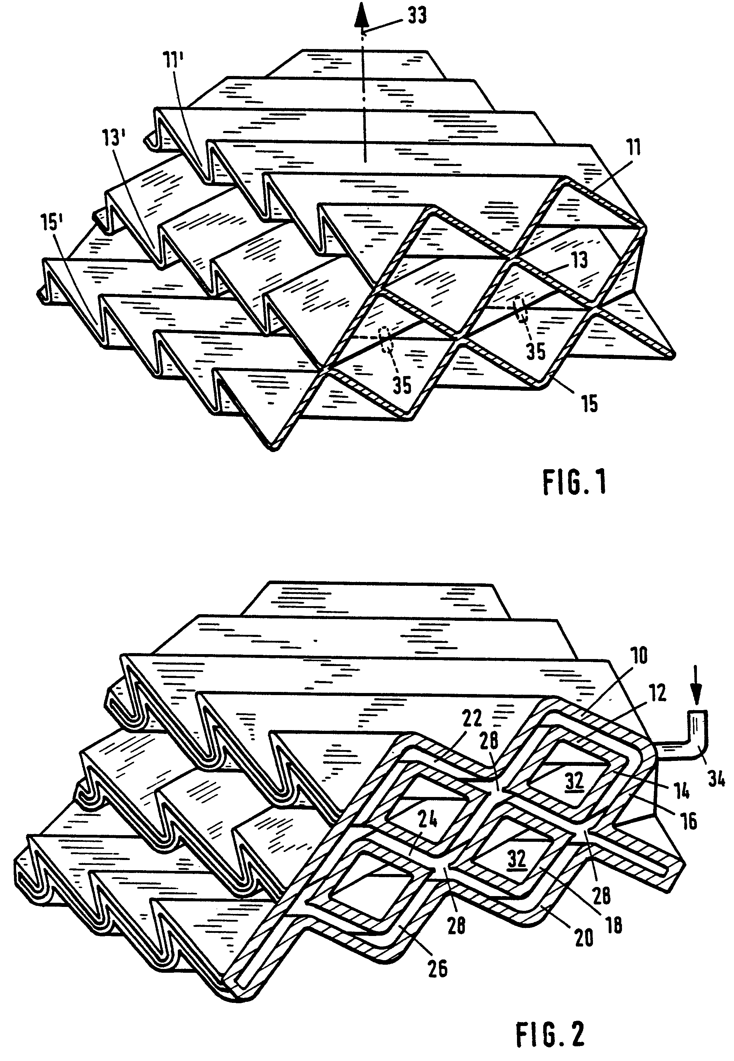

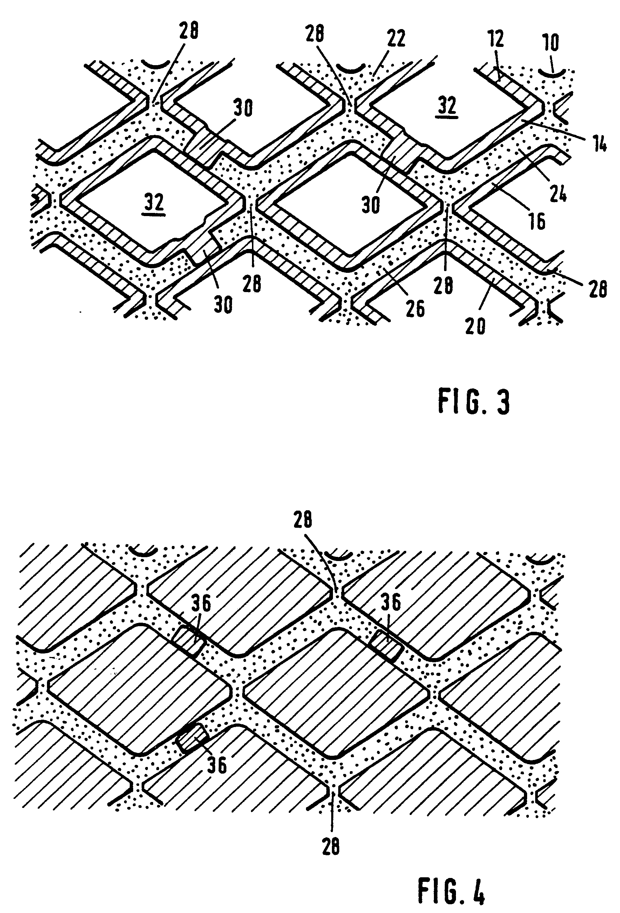

Jeweils zwei geformte Schalen bzw. Lagen 10, 12 ; 14, 16 ; 18, 20 aus saugfähiger Zellulosemasse, z. B. Kartonmasse (Fig. 2) sind übereinander gestapelt unter Bildung von Formhohlräumen 22, 24, 26 (Fig. 3). Diese sind durch Durchlässe 28 miteinander verbunden. Die einzelnen Lagen sind durch Distanzkörper 30 gegeneinander abgestützt. Zwischen den Lagen befinden sich Hohlräume 32, welche als Entfeuchtungskanäle dienen. An der Form (Fig. 2) befindet sich eine Einfüllöffnung 34.

Zur Durchführung des Verfahrens wird die Form mit nicht dargestellten Seitenwänden versehen und eine keramische Komponenten enthaltende dickflüssige Suspension, bestehend aus 30 % Kaolin, 25 % Feldspat, 15 % Quarz und 28,5 % Wasser sowie ca. 1,5 % Soda in die Einfüllöffnung 34 gegossen. Dabei fliesst die Suspension durch die Durchlässe 28 von einer Lage zur anderen und füllt die Formhohlräume zwischen den Lagen. Es findet ein Dräniervorgang statt, indem die Flüssigkeit der Suspension entzogen und durch die Kartonmasse aufgesaugt wird. In einem nicht dargestellten Trocknungs- und Sinterofen wird die Form während ca. 6 Std. bei ca. 70 °C getrocknet, indem die feuchte Luft abgeführt wird, wobei die Hohlräume 32 die Abfuhr der feuchten Luft erleichtern. Nach Beendigung des Trocknungsvorganges wird die Form auf die Brandtemperatur von ca. 1100 bis ca. 1 400 °C erhitzt und Std. bei dieser Temperatur gehalten, wobei die Verbrennungsgase fortgeschafft werden, bis nur noch der fertige keramische Körper gemäss Fig. 1 zurückbleibt.

Dieser besteht aus mehreren Lagen 11, 13, 15 gewellter Platten, deren Wellentäler 11', 13', 15' quer, z. B. in einem Winkel von 90° zueinander verlaufen. Die säulenartigen Verbindungsstellen zwischen diesen Lagen sind in Fig. 1 mit 35 angedeutet. Die Längsrichtung des keramischen Körpers ist mit 33 bezeichnet. Die Verbindungsstellen 35 entsprechen den Durchlässen 28.

Bei der Variante gemäss Fig. 4 sind als Distanzkörper 36 lose eingelegte Stäbe oder Bänder aus Kartonmasse vorgesehen. In diesem Falle sind die Hohlräume 32 ausgefüllt.

Es versteht sich, dass die Lagen 11, 13, 15 mit beliebiger Oberflächenstrukturierung versehen sein können, sie können z. B. auch Durchlässe bzw. Durchbrüche beliebiger Gestalt aufweisen und/oder Aufrauhungen in bestimmten Musterungen und Korngrössen aufweisen. Dies wird erzielt durch entsprechende Strukturierung der Form.

Die Lagen bzw. Schalen der Form werden in bekannter Art und Weise z. B. durch Vakuumformen und Trocknen einer Zellulosefaser-Aufschlämmung, bertehend aus Holzschliff, Leim und Wasser, hergestellt. Sie können z. B. auch aus Kunststoff, wie geblähtem Polystyrol (z. B. Styropor[R]) bestehen. Dabei kann das Polystyrol z. B. porös bzw. saugfähig eingestellt sein oder kleine Durchtrittsöffnungen zur Dränierung der Flüssigkeit aufweisen.

Es versteht sich, dass die Verbindungsstellen statt säulenartig auch z. B. keilförmig ineinandergehend oder länglich sein können.

Ferner können die Distanzkörper 36 auch in einem Stück mit den Lagen bzw. Formkörpern gefertigt sein.

Ausserdem versteht sich, dass die Form nicht nur organisches Material enthalten muss, sondern auch anorganische Komponenten, welche nach dem Verbrennungsvorgang wenigstens teilweise zurückbleiben können.

## Patentansprüche

1. Keramischer Körper, insbesondere Füllkörper für Stoff- bzw. Wärmeaustausch, Misch- bzw. Trennvorrichtungen etc., bestehend aus wenigstens zwei sich im wesnetlichen quer zu dessen Längsrichtung erstreckenden Lagen, wobei zwischen benachbarten Lagen mindestens eine Verbindungsstelle vorgesehen ist, dadurch gekennzeichnet, dass der keramische Körper mitsamt Verbindungsstellen in einem Stück gegossen ist.

2. Keramischer Körper nach Anspruch 1, dadurch gekennzeichnet, dass als Lagen flächenartige gewellte Gebilde vorgesehen sind.

3. Keramischer Körper nach Anspruch 2, dadurch gekennzeichnet, dass die Wellentäler jeweils benachbarter Lagen quer zueinander verlaufen.

4. Keramischer Körper nach Anspruch 3, dadurch gekennzeichnet, dass die Wellentäler jeweils benachbarter Lagen in einem Winkel von 90° zueinander verlaufen.

5. Keramischer Körper nach Anspruch 1, dadurch gekennzeichnet, dass die Lagen durch säulenartige Verbindungsstellen miteinander verbunden sind, welche zusammen mit den Lagen gegossen sind.

6. Keramischer Körper nach Anspruch 1, dadurch gekennzeichnet, dass die Lagen Durchlässe aufweisen.

7. Keramischer Körper nach Anspruch 1, dadurch gekennzeichnet, dass die Lagen eine strukturierte Oberfläche aufweisen.

8. Verfahren zur Herstellung des keramischen Körpers nach Anspruch 1, dadurch gekennzeichnet, dass man eine keramische Komponenten enthaltende Suspension in eine aus mehreren Lagen zusammengesetzte Form aus dränierfähigem Material bringt, wobei die Suspension über die Formhohlräume der Lagen gleichmässig verteilt wird und durch die Form der Suspension soviel Flüssigkeit entzogen wird, dass eine keramische Masse in den Formhohlräumen zwischen den einzelnen Lagen zurückbleibt, und dass die Form mitsamt der keramischen Masse in einen Ofen gebracht wird zwecks Trocknung und Brand bzw. Sinterung der keramischen Masse bei im wesentlichen rückstandsloser Verbrennung und-/oder Vergasung der Form.

9. Form zur Durchführung des Verfahrens nach Anspruch 8, gekennzeichnet durch flächenartige Gebilde aus Zellulosemasse, welche unter Formhohlraumbildung lagenartig gestapelt sind.

10. Form nach Anspruch 9, dadurch gekennzeichnet, dass die flächenartigen Gebilde Verbindungskanäle für die Suspension aufweisen zwecks Guss von Verbindungsstellen.

11. Form nach Anspruch 9, dadurch gekennzeichnet, dass die flächenartigenb Gebilde Distanzkörper aufweisen.

12. Form nach Anspruch 11, dadurch gekennzeichnet, dass die Distanzkörper Vorsprünge an den flächenartigen Gebilden vorgesehen sind.

## Claims

1. Ceramic body, more particularly packing for mass transfer or heat exchange, mixing or separating apparatuses, etc., comprising not less than two layers extending substantially transverse to its longitudinal direction, at least one connection point being provided between adjacent layers, characterised in that the ceramic body is cast together with its connection points in one piece.

2. Ceramic body according to claim 1, characterised in that planar corrugated structures are provided as the layers.

3. Ceramic body according to claim 2, characterised in that the troughs of adjacent layers in each case run transverse to one another.

4. Ceramic body according to claim 3, characterised in that the troughs of adjacent layers in each case run at a 90° angle to one another.

5. Ceramic body according to claim 1, characterised in that the layers are joined to one another by pillar-like connection points which are cast together with the layers.

6. Ceramic body according to claim 1, characterised in that the layers incorporate passages.

7. Ceramic body according to claim 1, characterised in that the layers have a structured surface.

8. Method for manufacturing the ceramic body according to claim 1, characterised by introducing a suspension containing ceramic components into a mould of drainable material made up of a plurality of layers, distributing the suspension evenly via the cavities of the layers and removing enough liquid from the suspension through the mould that a ceramic compound remains in the cavities between the individual layers, and by introducing the mould along with the ceramic compound into a furnace in order to dry and fire or sinter the ceramic compound while combusting and/or gasifying the mould substantially without leaving a residue.

9. Mould for carrying out the method according to claim 8, characterised by planar structures made from cellulose compound which are stacked in layers and thereby form cavities.

10. Mould according to claim 9, characterised in that the planar structures have communication channels for the suspension for the purpose of casting connection points.

11. Mould according to claim 9, characterised in that the planar structures have spacing pieces.

12. Mould according to claim 11, characterised in that the spacing pieces are provided as projections on the planar structures.


## Revendications

1. Corps en céramique, en particulier corps de remplissage pour échangeurs de température ou de matière, pour mélangeurs ou dispositifs de fractionnement etc., composé d'au moins deux strates s'étendant dans un plan globalement perpendiculaire au sens longitudinal du corps, deux strates adjacentes étant reliées respectivement par l'intermédiaire d'au moins un point de liaison, caractérisé par le fait que le corps en céramique avec ses points de liaison est moulé d'un seul tenant.

2. Corps en céramique selon la revendication 1, caractérisé par le fait que les différentes strates sont prévues sous forme d'éléments plats ondulés.

3. Corps en céramique selon la revendication 2, caractérisé par le fait que les creux des plis de deux strates adjacentes s'étendent perpendiculairement les uns par rapport aux autres.

4. Corps en céramique selon la revendication 3, caractérisé par le fait que les creux des plis de deux strates adjacentes sont orientés à un angle de 90° les uns par rapport aux autres.

5. Corps en céramique selon la revendication 1, caractérisé par le fait que les différentes strates sont reliées entre elles par l'intermédiaire de colonnettes de liaison, qui sont moulées d'un tenant avec les strates.

6. Corps en céramique selon la revendication 1, caractérisé par le fait que les strates sont pourvues d'orifices.

7. Corps en céramique selon la revendication 1, caractérisé par le fait que les strates possèdent des surfaces structurées.

8. Procédé de fabrication d'un corps en céramique selon la revendication 1, caractérisé par le fait que l'on introduit une suspension contenant des composants céramiques dans un moule assemblé de plusieurs strates fabriquées en une matière absorbante, la suspension étant répandue uniformément dans les chambres creuses comprises entre les strates, le moule pouvant drainer assez de liquide de la suspension pour qu'une pâte céramique reste dans les chambres creuses comprises entre les différentes strates du moule, et par le fait que le moule contenant la pâte céramique est ensuite placé dans une étuve pour séchage et cuisson, voire frittage, de la pâte céramique, accompagnés d'une combustion et/ou gazéification quasiment sans résidu du moule.

9. Moule permettant la réalisation du procédé selon la revendication 8, caractérisé par des éléments plats faits en une pâte cellulosique et empilés les uns sur les autres en couches, de façon à former entre eux des chambres creuses.

10. Moule selon la revendication 9, caractérisé par le fait que les différents éléments plats comportent des orifices de passage de la suspension permettant la coulée des points de liaison.

11. Moule selon la revendication 9, caractérisé par le fait que les différents éléments plats comportent des plots entretoises.

12. Moule selon la revendication 11, caractérisé par le fait que les plots entretoises sont prévus sous forme de bossages sur les éléments plats.

FIG.1

FIG.2

FIG. 3

FIG. 4